# EUROPEAN PATENT APPLICATION

(11) **EP 1 598 378 A1**
(43) Date of publication of application: **23.11.2005**
(21) Application number: 04252987.5
(22) Date of filing: 21.05.2004
(51) Int. Cl.: C08F 10/00, C08L 23/08, C08L 23/06

(54) **Process for the preparation of bimodal polyethylene**

(71) Applicant: Borealis Technology Oy, 06101 Porvoo (FI)
(72) Inventor: Follestad, Arild, 3960 Stathelle (NO); Rytter, Erling, 7049 Trondheim (NO); Blom, Richard, 0753 Oslo (NO); Ommundsen, Espen, 3790 Langesund (NO)
(74) Representative: Campbell, Neil Boyd

(57) **Abstract**

A process for the preparation of a multimodal polyethylene comprising:
in a stage (A) polymerising ethylene and optionally at least one C₃₋₂₀ alpha olefin in the presence of a metallocene catalyst of formula (I)

   Rᵢ(CpR'ⱼ)(CpR"ₖ)MQ₂ (I)
(wherein M is Ti, Hf or Zr;
Cp is cyclopentadienyl;
R is a bridge linking the two Cp groups;
each R' is independently a C₁₋₂₀ hydrocarbyl group optionally containing at least one heteratom selected from O, Si, Ge or P;
each R" is independently a C₁₋₂₀-hydrocarbyl group optionally containing at least one heteratom selected from O, Si, Ge or P and two or more adjacent R" substituents may form a cyclic structure fused to the Cp ring which may be substituted by at least one group R';
each Q is a sigma ligand and optionally two Q ligands, taken together may form a cyclic structure containing the metal atom;
i is 0 or 1;
j is an integer of 3 to 5-i; and
k is 0 to 5-i.);
and a cocatalyst;
to produce a lower molecular weight component;
and in a stage (B) polymersing ethylene and at least one C₃₋₂₀ alpha olefin in the presence of the same metallocene as employed in stage (A); and a cocatalyst;
to produce a higher molecular weight component;
wherein said stages (A) and (B) can be carried out in any order.

## Description

This invention relates to a new process for the polymerisation of ethylene, in particular to a multistage process using a particular metallocene catalyst comprising a multisubstituted cyclopentadienyl ligand to form a bimodal polyethylene.

A significant proportion of ethylene polymer produced industrially today is bimodal. By bimodal (or multimodal), it is meant that the polymer consists of at least two components (fractions), one of which has a relatively low molecular weight and a relatively high density and another of which has a relatively high molecular weight and a relatively low density. Often the lower molecular weight component is a ethylene homopolymer with the higher molecular weight component being a copolymer of ethylene with an alpha olefin such as propylene or butene.

Bimodal polymers are desirable since they combine the advantageous mechanical properties associated with high molecular weight with improved processing properties associated with low molecular weight.

Such polymers are made in staged polymerisation reactions or may be made in a single stage polymerisation where two different catalysts are employed, each catalyst giving rise to a different component at the conditions employed in the reactor. Where a staged process is used, the polyethylenes are almost exclusively manufactured using Ziegler-Natta catalysts. These catalysts however tend to produce a very heterogeneous mixture of polymer molecules in each polymerisation stage. Thus for example, the molecular weight distribution of each polymer component formed using Ziegler-Natta catalysis can be very broad and there can be large variations in the amount of comonomer incorporated in a component. The skilled polymer chemist is thus looking for ways in which to exert more control over the formed polymer composition, e.g. by producing more homogeneous components.

A more homogenous polymer product can be obtained by using single-site catalysis. The most prominent catalysts with single-site properties are metallocene-based catalysts. Whilst metallocene catalysts exhibit improvements in homogeneity, they do unfortunately have their own inherent disadvantages in comparison to Ziegler catalysts.

Thus, it has proved difficult to obtain polymers having sufficiently high molecular weight using single site technology. This problem is exacerbated where the target material is multimodal. In order to produce a multimodal polymer having approximately the same melt index as a corresponding unimodal polymer, the high molecular weight component in a bimodal composition must have a very high molecular weight. Many metallocene catalysts cannot produce such high molecular weight polymers. Moreover, the presence of comonomer in bimodal polymers makes the problem of achieving such high molecular weight even greater, since comonomer incorporation usually considerably reduces molecular weight.

Furthermore, the level of comonomer needed in the high molecular weight component of a bimodal polymer is much higher than that needed in a unimodal material of the same final stiffness (density). There are thus significant problems in producing bimodal polymers having desired polymer properties, in particular molecular weight (Mw) and molecular weight distribution, when using metallocene type catalysts.

An additional problem derives from the fact that the activity of metallocene catalysts is usually enhanced by presence of hydrogen. This is in sharp contrast to Ziegler catalysts, which tend to exhibit poor yield in the reactor where there is high hydrogen concentration. This is caused partly by the fact that a high hydrogen/ethylene concentration ratio is needed to obtain a sufficiently low molecular weight, which, since there is a maximum total pressure allowed, means that ethylene concentration must be low It is not possible therefore simply to introduce a metallocene catalyst to a staged polymerisation process optimised for Ziegler polymerisation. In such a situation, the result would be an unbalanced relationship between reactors.

In a staged process it is normal for a first stage to be carried out employing a higher hydrogen concentration than a second stage. Whilst this is rarely an issue in Ziegler catalysis, when employing metallocenes, a problem with such a set up is that the majority of the polymer is then made in the hydrogen rich reactor. This is not desirable since the intention is for both reactors to produce an almost equal amount of polymer.

Furthermore, catalysts that need low comonomer/ethylene ratios in the surrounding fluid in order to incorporate a given level of comonomer are preferable from a production point of view because high concentrations of comonomer tend to give higher losses within the bleed gas and more comonomer escapes dissolved in the polymer. Also higher concentrations of comonomer are more likely to give problems with condensation and stickiness of powder, as well as more difficult volatilisation by flashing. Problems may also arise when drying the polymer after polymerisation. Many metallocene catalysts do not work efficiently at such low comonomer/ethylene ratios.

In addition, high polymerisation temperature is favoured in commercial production over low polymerisation temperature, because the higher reactor temperature makes it easier to remove polymerisation heat to cooling water. Many metallocene catalysts do not function efficiently under such high polymerisation temperatures, but produce a polymer having reduced molecular weight.

There are thus a considerable number of drawbacks and obstacles to the successful use of metallocene catalysis in staged polymerisations for the formation of bimodal products.

Nevertheless, single site catalysts have been employed in multistage polymerisations. In WO 00/40620 a bimodal polyethylene useful for making films was prepared in the presence of a catalyst comprising either a bridged siloxy substituted bisindenyl zirconium dihalide compound or a catalyst comprising a monoalkyl substituted biscyclopentadienyl hafnium compound.

EP-A-986588 discloses ethylene polymerisation in two stages using a bis tetrahydroindenyl catalyst to form a bimodal polyethylene.

A multistage process for the manufacture of polyethylene is also described in EP-A-605952 in which two catalysts are employed. In the examples the compounds bis(1,3-n-butylcyclopentadienyl)zirconium dichloride and bis(1,3-dimethylcyclopentadienyl)zirconium dichloride were used as metallocene compounds.

There remains however the need to find alternative multistage processes for the formation of polyethylenes which give rise to polymers which have good optical and mechanical properties as well as good processability in any subsequent conversion process, such as film extrusion, blow moulding, pipe extrusion or wire and cable coating.

It has surprisingly been found that when a staged polymerisation reaction is effected in the presence of a metallocene catalyst which carries a multisubstituted cyclopentadienyl ring, the resulting bimodal polymers have a surprisingly low melt index (and thus high molecular weight) and a high SHI and hence broad molecular weight distribution. The catalyst also works effectively at high polymerisation temperatures. Also the metallocene catalysts works efficiently at low comonomer/ethylene ratios giving high incorporation of comonomer. Finally, the catalyst has balanced activity in a staged polymerisation where reactors are operated using different hydrogen concentrations.

Thus, viewed from one aspect the invention provides a process for the preparation of a multimodal (e.g. bimodal) polyethylene polymer comprising:
in a stage (A) polymerising ethylene and optionally at least one C₃₋₂₀ alpha olefin in the presence of a metallocene compound of formula (I)

   Rᵢ(CpR'ⱼ)(CpR"ₖ)MQ₂ (I)

   (wherein M is Ti, Hf or Zr;
   Cp is cyclopentadienyl;
   R is a bridge linking the two Cp groups;
   each R' is independently a C₁₋₂₀ hydrocarbyl group optionally containing at least one heteroatom selected from O, Si, Ge or P**;**
   each R" is independently a C₁₋₂₀-hydrocarbyl group optionally containing at least one heteroatom selected from O, Si, Ge or P and two or more adjacent R" substituents may form a cyclic structure fused to the Cp ring which may be substituted by at least one group R';
   each Q is a sigma ligand and optionally two Q ligands, taken together may form a cyclic structure containing the metal atom;
   i is 0 or 1;
   j is an integer of 3 to 5-i; and
   k is 0 to 5-i.);
and a cocatalyst;
to produce a lower molecular weight component;
and in a stage (B) polymerising ethylene and at least one C₃₋₂₀ alpha olefin in the presence of the same metallocene as employed in stage (A); and a cocatalyst;
to produce a higher molecular weight component;
wherein said stages (A) and (B) can be carried out in any order.

Viewed from another aspect the invention provides an ethylene polymer obtainable using a process as hereinbefore defined.

Viewed from another aspect the invention provides the use of a metallocene compound as hereinbefore defined in a multistage process for the manufacture of a multimodal polyethylene polymer.

In the metallocene of formula (I), M is preferably Zr or Hf, especially Zr. Each R' is preferably independently selected from a C₁₋₂₀-alkyl group, C₆₋₂₀-aryl group, C₇₋₂₀-arylalkyl group, C₇₋₂₀-alkylaryl group, C₂₋₂₀-alkenyl group, C₁₋₂₀-alkoxy group, or an -OSiR¹₃ group. For the avoidance of doubt, the R' substituents cannot form a fused ring, i.e. formula (I) cannot cover a bisindenyl species.

Especially preferably, R' is a C₁₋₆-alkyl group, e.g. methyl, ethyl, propyl or butyl group, most preferably methyl or an OSi(C₁₋₆-alkyl)₃ group, e.g. a OSiMe₃ or OSiMe₂^{t}bu group (Me is methyl). Preferably all R' substituents should be identical.

It is preferred if each R" is independently selected from a C₁₋₂₀-alkyl group, C₆₋₂₀-aryl group, C₇₋₂₀-arylalkyl group, C₇₋₂₀-alkylaryl group, C₂₋₂₀-alkenyl group, C₁₋₂₀-alkoxy group, an -OSiR¹₃ group, and two or more adjacent R" substituents may form a cyclic structure fused to the Cp ring which may be further substituted by at least one group R', e.g. a C₁₋₆-alkyl.

Especially preferably R" is a C₁₋₆-alkyl group, e.g. methyl, ethyl, propyl or butyl group, most preferably methyl or an OSi(C₁₋₆-alkyl)₃ group, e.g. a OSiMe₃ or OSiMe₂^{t}bu group. Preferably all R" substituents should be identical.

Each R¹ is preferably independently selected from hydrogen, C₁₋₁₀-alkyl group, C₃₋₁₂-cycloalkyl group, C₁₋₁₀-alkoxy group, C₂₋₁₀-alkenyl group, C₆₋₂₀-aryl group, C₆₋₂₀-aryloxy group, C₇₋₂₀-arylalkyl group; C₇₋₂₀-alkylaryl group and C₈₋₂₀-arylalkenyl group. Especially preferably R¹ is a C₁₋₁₀-alkyl group or C₂₋₁₀-alkenyl e.g. methyl, ethyl, propyl or t-butyl group, most preferably methyl.

Q is a sigma ligand, i.e. one that forms a single bond to the metal. Each Q is preferably independently selected from hydrogen, a C₁₋₁₀-alkyl, C₃₋₁₂-cycloalkyl, C₁₋₁₀ -alkoxy group, C₂₋₁₀-alkenyl group, C₆₋₂₀-aryl group, C₆₋₂₀-aryloxy group, C₇₋₂₀-arylalkyl group; C₇₋₂₀-alkylaryl group, C₇₋₂₀-arylalkenyl group, -SR², -PR²₃ group, - SiR²₃ group, -OSiR²₃ group, -NR²₂ group, a halogen atom and -CH₂-Y group, wherein Y is C₆₋₂₀-aryl, C₅₋₂₀-heteroaryl, C₁₋₂₀-alkoxy, C₆₋₂₀-aryloxy, -NR²₂, -PR²₃, - SiR²₃, or -OSiR²₃. Two Q groups taken together may also form a ring with the metal ion.

Especially preferably Q is hydrogen, halide, C₁₋₆-alkyl, N(C₁₋₆-alkyl)₂ or benzyl. Preferably, both Q substituents should be identical.

Each R² is independently selected from hydrogen, C₁₋₂₀-alkyl group, C₂₋₂₀-alkenyl group, C₂₋₂₀-alkynyl group, C₃₋₁₂-cycloalkyl group or C₆₋₂₀-aryl; and the two substituents R² can form a ring, e.g. five- or six-membered ring, together with the atom to which they are attached.

Especially preferably, R² is a C₁₋₁₀-alkyl group or C₂₋₁₀-alkenyl e.g. methyl, ethyl, propyl or butyl group, most preferably methyl.

R is preferably a 1 to 3 atom bridge, e.g. a methylene or ethylene bridge or a silicon bridge, e.g. Si(C₁₋₆-alkyl)₂. In a highly preferred embodiment the metallocene is unbridged, i.e. the subscript i is zero.

The subscript j is preferably 3 or 4, especially 3. Ideally therefore the cyclopentadienyl ring should preferably carry three substituents. Where three substituents are present and the metallocene is unbridged, these should preferably be arranged in the 1,2 and 4 positions of the cyclopentadienyl ring.

Preferably, both cyclopentadienyl units are identical.

Hence, preferred metallocenes of use in the process of the invention have the formula (II)

(Cp(R³)₃)₂MQ'₂. (II)

wherein Cp and M are as hereinbefore defined; R³ is C₁₋₆-alkyl and Q' is hydrogen, halide, C₁₋₆-alkyl, N(C₁₋₆-alkyl)₂ or benzyl.

Representative metallocenes therefore include:

(1,2,4-Me₃Cp)₂ZrCl₂

(1,2,4-Me₃Cp)₂HfCl₂

(1,2,4-Me₃Cp)₂TiCl₂

(1,2,4-Et₃Cp)₂ZrCl₂

(1,2,4-Et₃Cp)₂HfCl₂

(1,2,4-Et₃Cp)₂TiCl₂

(1,2,3-Me₃Cp)₂ZrCl₂

(1,2,4-Me₃Cp)₂ZrBz₂

(1,2,4-Me₃Cp)₂HfBz₂

(1,2,4-Me₃Cp)₂TiBz₂

(1,2,4-Et₃Cp)₂ZrBz₂

(1,2,4-Et₃Cp)₂HfBz₂

(1,2,4-Et₃Cp)₂TiBz₂

In a further preferred embodiment, the process of the invention should be effected using one metallocene only.

In the definitions above, any alkyl, alkenyl or alkynyl residue (with up to 20 C-atoms) referred to above alone or as a part of a moiety may be linear or branched, and preferably contains up to 10, e.g. up to 6, carbon atoms. C₆₋₂₀ -aryl is preferably phenyl or naphthyl, preferably phenyl. C₁₋₂₀-hydrocarbyl includes C₁₋₂₀-alkyl, C₆₋₂₀-aryl, C₂₋₂₀-alkenyl or C₂₋₂₀-alkynyl. Halogen means F, Cl, Br or I, preferably Cl. The term C₅₋₂₀-heteroaryl may contain e.g. 1, 2 or 3, preferably 1 or 2 heteroatoms selected from N, O or S, preferably N (e.g. pyridyl). Bridged metallocenes may exist is rac or meso forms or mixtures thereof and can be separated using conventional techniques known in the art.

The preparation of the metallocenes of the invention can be carried out according or analogously to the methods known from the literature and is within skills of a person skilled in the field. Thus for the preparation see e.g. EP-A-129 368, examples of compounds wherein the metal atom bears an amino ligand see inter alia WO-A-9856831 and WO-A-0034341. For the preparation see also e.g. in EP-A-260 130, WO-A-9728170, WO-A-9846616, WO-A-9849208, WO-A - 9912981, WO-A-9919335, EP-A-836608WO-A-9856831, WO-A-00/34341, EP-A-423 101 and EP-A-537 130.

The metallocene catalyst is preferably supported as is well known in the art. The support material may be an organic or inorganic material, e.g. an organic polymer, such as polystyrene, poly-divinylbenzene or a copolymer of styrene and divinylbenzene, or an inorganic halide, such as magnesium dichloride, or an inorganic oxide, such as silica. Most preferred carriers are the inorganic oxides. These include SiO₂, Al₂O₃, MgO, ZrO₂, B₂O₃, CaO, ZnO, BaO and TiO₂. Also the mixtures of two or more oxides may be used, such as SiO₂-TiO₂, SiO₂-Al₂O₃ and SiO₂-ZrO₂.

Preferably the support is a porous material so that the metallocene may be loaded into the pores of the support, e.g. using a process analogous to those described in WO94/14856 (Mobil), WO95/12622 (Borealis), WO96/32923 (Borealis) and WO96/00243 (Exxon). The particle size is not critical but the volume average particle size may be in the range 5 to 1000 µm, preferably 10 to 500 µm.

The active metal (ie. the metal of the procatalyst) is preferably loaded onto the support material at from 0.1 to 4%, preferably 0.1 to 1.0%, especially 0.1 to 0.5%, by weight metal relative to the dry weight of the support material.

The cocatalyst/activator compound may be any compound capable of activating the metallocene compound. These include alumoxanes, e.g. methylaluminoxane (MAO), hexaisobutylaluminoxane and tetraisobutylaluminoxane, aluminium alkyl compounds or a boron compound (e.g. a fluoroboron compound such as triphenylpentafluoroboron or triphenylcarbenium tetraphenylpentafluoroborate ((Ph)₃B+B-(C₆F₅)₄)).

Where an aluminoxane or boron activator is used, the mole ratio of the cocatalyst to the metallocene can be from 0.1:1 to 10000:1, especially 1:1 to 50:1, particularly 1:2 to 30:1. More particularly, where an alumoxane cocatalyst is used, the Al:M molar ratio is conveniently 2:1 to 10000:1, preferably 50:1 to 400:1.

At least one of the polymerisation stages is a stage (A) where the lower molecular weight polymer component is produced. The lower molecular weight component has a higher density than the higher molecular weight component. Typically, the density of the lower molecular weight component is from about 935 to 972 kg/m³, preferably 940 to 960 kg/m³ depending on the desired density of the final polymer composition.

Further, it preferably has a melt index MFR₂ of from about 20 to 1000 g/10 min, preferably from about 30 to 500 g/10 min and in particular from about 50 to 300 g/10 min. The weight average molecular weight of the lower molecular weight component may range from 15,000 to 50,000.

Typically, the amount of the lower molecular weight polymer component in the polyethylene composition is such that the weight ratio of the lower molecular weight polymer component to the higher molecular weight component is from 30/70 to 70/30, preferably from 60/40 to 40/60, e.g. approximately 50/50. The polymer composition may contain addition components to the lower and higher molecular weight components but these usually constitute less than 10 % wt of the bimodal polymer.

The polymerisation stage (A) may be conducted as a slurry or as a gas phase polymerisation. Preferably, it is conducted as a slurry polymerisation.

The temperature employed in stage (A) may range from 60 to 110°C depending on the density of the polymer to be produced. Preferably, the temperature is within the range of from 75 to 100°C and especially from 80 to 95°C.

Hydrogen may be introduced into stage (A) in such an amount that the resulting polymer has the desired MFR. The amount of hydrogen will be readily determined by the skilled polymer chemist. It is preferred if more hydrogen is employed in stage (A) than stage (B).

The lower molecular weight component may be an ethylene copolymer or homopolymer. Hence, if required, comonomer may be introduced in stage (A) in such an amount that the resulting polymer has the desired density. One or more comonomers may be used. If used, the comonomers are usually selected from alpha-olefins with 3 to 20 carbon atoms and in particular from 1-butene, 1-hexene, 4-methyl-1-pentene, 1-octene and 1-decene.

The amount of copolymer incorporated should be relatively low e.g. 0 to 2 %mol. The ratio of comonomer to ethylene may be in the range 0 to 400 mol/kmol, preferably 0 to 300 mol/kmol.

If the stage (A) is conducted as a slurry polymerisation, then it is preferably conducted in an inert diluent. The diluent is preferably a hydrocarbon having from 1 to 20 carbon atoms. More preferably, the diluent is an aliphatic hydrocarbon having from 3 to 8 carbon atoms. Especially, the diluent is selected from propane, butanes, pentanes and hexanes and their mixtures. It is worth noting that in addition to the compounds above, the diluent may contain small amounts of other compounds, such as olefins, dienes, ethane, methane etc.

The process of the invention also includes at least one polymerisation stage (B), where a higher molecular weight polymer component is produced. The high molecular weight component typically has a melt index MFR₂ of from about 0.001 to 10 g/10 min, preferably from about 0.001 to 5 g/10 min, more preferably from 0.01 to 1 g/10min and in particular from about 0.01 to 0.7 g/10 min. Further, the density of the higher molecular weight component is from about 885 to 935 kg/m³, depending on the desired density of the final polymer composition. Its molecular weight may range from 50,000 to 2,000,000, more preferably from 200,000 to 1,500,000, most preferably from 400,000 to 1,000,000.

The polymerisation stage (B) may be conducted as a slurry or as a gas phase polymerisation. Preferably, it is conducted as a gas phase polymerisation.

The temperature in stage (B) may range from 60 to 95°C depending on the density of the polymer to be produced. Preferably the temperature is within the range of from 75 to 90°C and especially from 80 to 90°C. Both for polymerisation stage (A) and polymerisation stage (B) it is important that the temperature is below the softening temperature of the polymer.

The higher molecular weight component comprises at least one comonomer. Comonomer is introduced in such an amount into the polymerisation stage (B) that the resulting polymer has the desired density. One or more comonomers may be used and the comonomer may be the same as or different from what was used in stage (A). Especially advantageous properties may be obtained if the comonomer used in stage (B) is different from the comonomer used in stage (A). Moreover, it is sometimes advantageous to use two or more comonomers in stage (B). As in stage (A), the comonomers are usually selected from alpha-olefins, preferably from alpha-olefins with 3 to 20 carbon atoms and in particular from 1-butene, 1-hexene, 4-methyl-1-pentene, 1-octene and 1-decene.

The amount of comonomer incorporated in the higher molecular weight component may range from 1.5 to 8 mol%. The ratio of comonomer to ethylene employed in stage (B) may be in the range 1 to 100 mol/kmol, preferably 5 to 50 mol/kmol.

Hydrogen may also be introduced into polymerisation stage (B) to control the MFR of the polymer as is known in the art.

It is preferred if stage (A) is effected prior to stage (B). In addition, the process of the invention may comprise further steps before or after stages (A) and (B) e.g. a prepolymerisation step or second gas phase polymerisation.

In a further preferred embodiment stage (A) results in an ethylene homopolymer component with stage (B) forming an ethylene/butene or ethylene/hexene copolymer. Alternatively, stage (A) forms an ethylene/butene copolymer with stage (B) forming an ethylene/hexene copolymer.

The final polyethylene composition will be multimodal e.g. bimodal. Its density may range from 915 to 970 kg/m³, preferably from 920 to 960 kg/m³ Its MFR₂ may range from 0.01 to 30 g/10 min, preferably 0.05 to 2 g/10min, especially 0.05 to 1 g/10min. It may have an Mw/Mn of at least 3.5, preferably at least 5, more preferably at least 10. Its SHI_{2.7/210} may range from 10 to 200, preferably 20 to 100.

Generally the quantity of catalyst used in the process of the invention will depend upon the nature of the catalyst, the reactor types and conditions and the properties desired for the polymer product. Conventional catalyst quantities, such as described in the publications referred to herein, may be used.

The process of the invention yields a broad MWD product with numerous potential applications. The higher molecular weight component contributes to the strength of the polymer while the lower molecular weight component contributes to the processability of the product, e.g. enabling the product to be used in extrusion and blow moulding processes, for example for the preparation of tubes, pipes, containers.

The invention will now be described with reference to the following nonlimiting examples.

### Experimental

Melt indexes are measured according to ISO 1133, at 190°C. The load used in the measurement is indicated as a subscript, i.e. MFR₂ denotes the MFR measured under 2.16 kg load; MFR₂₁ denotes the MFR measured under 21.6 kg load.

Molecular weights were determined by size exclusion chromatography (SEC) using Waters 150CV plus no. 1115 instrument with a refractive index detector and a viscosity detector. The columns were 3 HT6E styragel from Waters. Oven temperature was 140 °C. Trichlorobenzene was used as a solvent. The instrument was calibrated with narrow molecular weight distribution polystyrene sample.

Density was determined according to ISO 1183-1987.

Rheology of polymers has been determined using Rheometrics RDA II Dynamic Rheometer. The measurements have been carried out at 190°C temperature under nitrogen atmosphere. From these measurements the dynamic viscosity at a given shear rate is evaluated. Thus, η0.05 and η300 denote the viscosity at shear rates of 0.05 s-1 and 300 s-1, respectively. SHI is the ratio of two viscosities and the respective shear stresses expressed in KPa are given as subscript.

### Example 1

Into a Thomas flask containing a magnetic stirrer was transferred 1.00 g of silica Sylopol 55SJ supplied by Grace, from which hydroxyl groups had been removed by keeping it in nitrogen stream at 600°C temperature overnight. In a second Thomas flask 1.275 ml 30 weight-% MAO solution in toluene (supplied by Albemarle) was diluted with 3.725 ml toluene. Into a third Thomas flask was put 10.7 mg (1,2,4-Me₃Cp)₂ZrCl₂ together with a magnetic stirrer. The MAO solution was transferred onto the metallocene compound and the mixture was stirred for 25 minutes at room temperature. Then, the resulting mixture was transferred into the flask containing the silica and the resulting slurry was stirred for one hour at room temperature. Finally, the volatile components were removed from the slurry by passing argon through the Thomas flask at 50°C temperature for four hours. The resulting catalyst was calculated to contain 0.26 wt% of zirconium and have a molar Al/Zr ratio of 198. This catalyst is subsequently referred to as Catalyst #1.

### Example 2

The procedure of Example 1 was repeated, except that 1.70 ml of the MAO solution was used and the solution containing the zirconium compound, MAO and toluene was mixed for 20 minutes before transferring it onto the silica. The resulting slurry was mixed for two hours. The duration of the drying step was 3.5 hours. The resulting catalyst was calculated to contain 0.26 wt-% of zirconium and have a molar Al/Zr ratio of 264. This catalyst is subsequently referred to as Catalyst #2.

### Example 3 (Comparative)

The procedure of Example 1 was repeated, except that instead of (1,2,4-Me₃Cp)₂ZrCl₂, (n-butyl-Cp)₂ZrCl₂ was used as the metallocene compound. Further, the amount of the MAO solution was 1.12 ml, the amount of toluene was 3.88 ml and the amount of the zirconium compound was 12 mg. The solution was stirred for 30 minutes before transferring it onto the silica. The slurry was stirred for three hours. The duration of the drying step was three hours. The resulting catalyst was calculated to contain 0.27 weight-% of zirconium and have a molar Al/Zr ratio of 169. This catalyst is subsequently referred to as Catalyst #3.

### Example 4

The catalysts prepared above were subjected to polymerisation tests. The polymerisation runs were conducted in a 1 litre autoclave reactor equipped with a stirrer. All the starting materials were purified over molecular sieves or activated alumina to remove traces of moisture.

An amount of catalyst was weighed into a steel cylinder of about 100 ml volume under oxygen-free conditions. The cylinder was pressurised with isobutane diluent and the catalyst mixture was charged into the reactor. Then, a predetermined amount of 1-hexene comonomer was added, followed by 0.5 litres of isobutane diluent. The polymerisation was started by pressurising the autoclave with ethylene so, that the total pressure in the reactor was 30 bar. Optionally, a predetermined flow of hydrogen was continuously metered into the reactor. After the specified time the run was stopped by evacuating the reactor. The polymer was then recovered, dried and analysed. The data of the runs is shown in Table 1. The polymer analysis data is shown in Table 2.

### Example 5

The procedure of Example 1 was repeated except that 4.76 ml of the MAO solution, 2.44 ml of toluene, 44 mg of the metallocene compound and 4.0 g of silica were used. The MAO, toluene and metallocene were stirred for 60 minutes at 30°C. The solution was added dropwise onto the silica while stirring, after which the mixture was allowed to stand for 15 minutes. After that the resulting catalyst was dried in nitrogen flow at 50°C.

This composition corresponds to a liquid impregnation volume of 1.8 ml/ g dry carrier and molar loadings of 0.03 mmol metallocene/ g dry carrier and 6 mmol Al / g carrier. This catalyst is subsequently referred to as Catalyst #4.

**Table 1:**

| **Polymerisation conditions in one-stage polymerisation runs of Example 4.** | | | | | | | | | |
|---|---|---|---|---|---|---|---|---|---|
| Run # | Cat # | Cat amount [mg] | Temp °C | Tot pres bar | 1-hexen (ml) | H₂ flow ml/min | Time min | Yield [g] | Activity (g PE/g cat, h) |
| 1 | 1 | 184 | 80 | 30 | - | - | 60 | 73 | 396 |
| 2 | 1 | 164 | 80 | 30 | 16 | - | 60 | 157 | 957 |
| 3 | 1 | 214 | 93 | 30 | 20 | - | 40 | 128 | 901 |
| 4 | 2 | 56 | 80 | 30 | 50 | 0.5 | 35 | 74 | 2270 |
| 5c | 3 | 46 | 80 | 30 | - | - | 50 | 30 | 770 |
| 6c | 3 | 146 | 80 | 30 | 10 | - | 35 | 86 | 1010 |
| c= comparative | | | | | | | | | |

**Table 2:**

| **Analysis data of polymers of Example 4.** | | | | | | |
|---|---|---|---|---|---|---|
| Run # | Catalyst # | MFR₂₁ g/10 min | M_{w} g/mol | Mₙ g/mol | M_{w}/Mₙ | Density g/cm³ |
| 1 | 1 | 0.12 | 542 000 | 175 000 | 3.1 | 0.9313 |
| 2 | 1 | NA | 455 000 | 190 000 | 2.4 | NA |
| 3 | 1 | 0.09 | 385 000 | 158 000 | 2.5 | 0.9192 |
| 4 | 2 | NA | 12 000 | 3 400 | 3,5 | NA |
| 5c | 3 | 3.8 | 210000 | 93000 | 2.3 | NA |
| 6c | 3 | 13 | 145000 | 61000 | 2.4 | NA |
| NA not analysed | | | | | | |

### Example 6

The procedure of Example 5 was repeated, except that all the amounts of the chemicals were multiplied by a factor of 2.5. This catalyst is subsequently referred to as Catalyst #5.

### Example 7

The procedure of Example 6 was repeated, except that 32 ml of toluene was added instead of 6.1 ml. This catalyst is subsequently referred to as Catalyst #6.

### Example 8 (Comparative)

The procedure of Example 5 was repeated except that (n-butyl-Cp)₂HfCl₂ was used instead of (1,2,4-Me₃Cp)₂ZrCl₂ as the transition metal compound. There was used 29 % higher molar loading for the metallocene compound and for Al. The amount of toluene was lower so that total liquid impregnation volume was 1.8 ml/g. This catalyst is subsequently referred to as Catalyst #7.

### Example 9 (Comparative)

The procedure of Example 8 was repeated, except that the silica was SP9-393A supplied by Grace. Also, 13 % higher molar loadings for metallocene and for Al were used. The amount of toluene was lower so that total liquid impregnation volume was 1.8 ml/g. This catalyst is subsequently referred to as Catalyst #8.

### Example 10

The catalysts prepared in Examples 5 to 9 were subjected to polymerisation tests. The polymerisation runs were conducted in an 8 litre autoclave reactor equipped with a stirrer. All the starting materials were purified over molecular sieves or activated alumina to remove traces of moisture.

An amount of catalyst was weighed into a steel cylinder of about 100 ml volume under oxygen-free conditions. The cylinder was pressurised with isobutane diluent and the catalyst mixture was charged into the reactor. Then, a predetermined amount of 1-hexene comonomer was added, followed by the addition of 3.8 litres of isobutane diluent. The temperature in the reactor was set to 90 °C. The polymerisation was started by pressurising the autoclave with ethylene so, that the total pressure in the reactor was 24 bar. Optionally, the ethylene feed contained a predetermined amount of hydrogen. After the specified time the run was stopped by evacuating the reactor. The polymer was then recovered, dried and analysed. The data of the runs is shown in Table 3. The polymer analysis data is shown in Table 4.

**Table 3:**

| **Polymerisation conditions in one-stage polymerisation runs of Example 10.** | | | | | | | | | |
|---|---|---|---|---|---|---|---|---|---|
| Run | Cat # | Cat amount [mg] | Temp °C | Total pres bar | 1-hexene (wt-% in isobutane) | H₂ vpm in ethylene feed | Time min | Yield [g] | Activity (g PE/g cat, h) |
| 7 | 4 | 870 | 90 | 24 | 0 | 0 | 45 | 270 | 410 |
| 8 | 4 | 865 | 90 | 24 | 1.5 | 0 | 45 | 830 | 1280 |
| 9 | 4 | 892 | 90 | 24 | 0.1 | 800 | 45 | 320 | 480 |
| 10 | 4 | 889 | 90 | 24 | 0 | 2750 | 45 | 390 | 580 |
| 11c | 7 | 4050 | 90 | 24 | 0.4 | 0 | 50 | 2100 | 620 |
| 12c | 7 | 3750 | 90 | 24 | 0.2 | 0 | 60 | 2000 | 530 |

**Table 4:**

| **Analysis data of polymers of Example 10.** | | | | | |
|---|---|---|---|---|---|
| Run # | Catalyst # | MFR₂₁ g/10 min | η_{0.05} Pas | η₃₀₀ Pas | Density g/cm³ |
| 7 | 4 | 0.3 | 590000 | 3240 | 0.9432 |
| 8 | 4 | 0.54 | 370000 | 2750 | 0.9281 |
| 9 | 4 | 13.8 | 15100 | 940 | 0.9521 |
| 10 | 4 | NA | 900 | 240 | 0.9645 |
| 11c | 7 | 1.4 | 62300 | 2760 | 0.9310 |
| 12c | 7 | 2.5 | 56000 | 2430 | 0.9300 |
| NA = not analysed | | | | | |

### Example 11

The catalysts produced in Examples 5 to 9 were used in two-stage polymerisation tests. They were conducted in the above mentioned 8 litre reactor. In the first stage the low molecular weight polymer component was produced and in the second stage the high molecular weight component was produced. The first stage was conducted as slurry polymerisation. The second stage was conducted as gas phase polymerisation.

In the first polymerisation stage the total pressure was 21 bar and the temperature was 85 °C. No comonomer was introduced into the first polymerisation stage. Hydrogen was introduced so that its amount was 4450 vpm in the ethylene feed. Otherwise the polymerisation was conducted in the same way as in Example 10.

After the first polymerisation stage had been completed, the hydrocarbons were removed and the pressure in the reactor was reduced to atmospheric pressure. The temperature of the reactor was set to the predetermined temperature. Then, nitrogen was added into the reactor so that the pressure was increased to 14 bar. 1-hexene was then added in the indicated amount and ethylene feed was started so that the pressure in the reactor was on the indicated level. Runs 13 and 15 were conducted this way. The experimental data can be found in Table 5 and the polymer data in Table 6.

### Example 12

The procedure of Example 11 was repeated, except that the second polymerisation stage was conducted as slurry polymerisation. Between polymerisation stage 1 and stage 2, the reactor was vented of hydrogen and a predetermined amount of 1-hexene was introduced.

Runs 14, 16 and 17 were conducted this way. The polymerisation temperature in the first stage of Run 16 was 75 °C and pressure was 19 bar. The experimental data can be found in Table 5 and the polymer data in Table 6.

**Table 5:**

| **Polymerisation conditions in two-stage polymerisation runs of Examples 11 and 12.** | | | | | | | | | |
|---|---|---|---|---|---|---|---|---|---|
| Run # | Cat # | Cat amt [mg] | 2^{nd} stage temp. °C | 2^{nd} stage press bar | 2^{nd} stage 1-hexene (wt-% in isobutane) | Split LMW/HMW | Time min | Yield [g] | Act (g PE/g cat, h) |
| 13 | 6 | 1680 | 85 | 18 | 0 | 50/50 | 67 | 1180 | 603 |
| 14 | 5 | 1850 | 85 | 20 | 5 | 50/50 | 40 | 1130 | 920 |
| 15c | 7 | 2310 | 80 | 21 | 106¹⁾ | 43/57 | 80 | 1390 | 450 |
| 16c | 8 | 2460 | 75 | 20 | 0.5 | 46/54 | 60 | 2530 | 1030 |
| 17c | 7 | 3110 | 85 | 20 | 5 | 50/50 | 40 | 1600 | 770 |

| | | | | | | | | | |
|---|---|---|---|---|---|---|---|---|---|
| 1): total amount in grams | | | | | | | | | |

The results shown in Table 6 show clearly that the process according to the present invention allows the production of bimodal ethylene polymers having a lower melt index (and thus a higher molecular weight) and a higher SHI (and thus a broader molecular weight distribution) than the prior art process.

**Table 6:**

| **Analysis data of polymers of Examples 11 and 12.** | | | | | | | | | | |
|---|---|---|---|---|---|---|---|---|---|---|
| Run # | Cat # | MFR₂ 1^{st} stage g/10 min | MFR₂ Final g/10 min | M_{w} Final g/mol | Mₙ Final g/mol | M_{w}/Mₙ Final | Density 1^{st} stage g/cm³ | Density Final g/cm³ | η_{0.05} Pa s | SHI_{2.7/210} |
| 13 | 6 | 51 | 0.07 | 220000 | 18000 | 12 | 0.9647 | 0.958 | 107934 | 28 |
| 14 | 5 | NA | 0.13 | 175000 | 15000 | 12 | NA | 0.944 | 71065 | 51 |
| 15c | 7 | 220 | 0.82 | 125000 | 15000 | 8.3 | NA | 0.938 | 9792 | 17 |
| 16c | 8 | NA | 0.22 | 210000 | 33000 | 6.3 | NA | 0.950 | 3300 | 7 |
| 17c | 7 | 224 | 0.26 | 210,000 | 35,000 | 3.4 | 0.969 | 0.942 | 27657 | 16 |
| NA = not analysed | | | | | | | | | | |

## Claims

1. A process for the preparation of a multimodal polyethylene comprising:
in a stage (A) polymerising ethylene and optionally at least one C₃₋₂₀ alpha olefin in the presence of a metallocene compound of formula (I)
Rᵢ(CpR'ⱼ)(CpR"ₖ)MQ₂ (I)
(wherein M is Ti, Hf or Zr;
Cp is cyclopentadienyl;
R is a bridge linking the two Cp groups;
each R' is independently a C₁₋₂₀ hydrocarbyl group optionally containing at least one heteratom selected from O, Si, Ge or P;
each R" is independently a C₁₋₂₀-hydrocarbyl group optionally containing at least one heteratom selected from O, Si, Ge or P and two or more adjacent R" substituents may form a cyclic structure fused to the Cp ring which may be substituted by at least one group R';
each Q is a sigma ligand and optionally two Q ligands, taken together may form a cyclic structure containing the metal atom;
i is 0 or 1;
j is an integer of 3 to 5-i; and
k is 0 to 5-i.);
and a cocatalyst;
to produce a lower molecular weight component;
and in a stage (B) polymersing ethylene and at least one C₃₋₂₀ alpha olefin in the presence of the same metallocene as employed in stage (A); and a cocatalyst;
to produce a higher molecular weight component;
wherein said stages (A) and (B) can be carried out in any order.

2. A process as claimed in claim 1 wherein R' is a C₁₋₆-alkyl group or an OSi(C₁₋₆-alkyl)₃ group.

3. A process as claimed in claim 1 or 2 wherein R" is a C₁₋₆-alkyl group or an OSi(C₁₋₆-alkyl)₃ group.

4. A process as claimed in any one of claims 1 to 3 wherein Q is hydrogen, halide, C₁₋₆-alkyl, N(C₁₋₆-alkyl)₂ or benzyl.

5. A process as in any one of claims 1 to 4 wherein R is a methylene or ethylene bridge or -Si(C₁₋₆-alkyl)₂-.

6. A process as claimed in any one of claims 1 to 4 wherein i is zero.

7. A process as claimed in any one of claims 1 to 6 wherein j is 3.

8. A process as claimed in claim 1 wherein said metallocene compound is of formula (II)
(Cp(R³)₃)₂MQ'₂ (II)
wherein Cp and M are as hereinbefore defined; R³ is C₁₋₆-alkyl and Q' is hydrogen, halide, C₁₋₆-alkyl, N(C₁₋₆-alkyl)₂ or benzyl.

9. A process as claimed in claim 8 wherein the substitution pattern on the Cp rings is 1,2,4.

10. A process as claimed in claim 8 wherein said metallocene is (1,2,4-Me₃Cp)₂ZrCl₂, (1,2,4-Me₃Cp)₂HfCl₂ or (1,2,4-Me₃Cp)₂TiCl₂.

11. A process as claimed in any one of claims 1 to 10 wherein only one metallocene is used.

12. A process as claimed in any one of claims 1 to 11 wherein said stage (A) precedes stage (B).

13. A process as claimed in any one of claims 1 to 12 wherein stage (A) is a slurry polymerisation and stage (B) a gas phase polymersaition.

14. A process as claimed in any one of claims 1 to 13 wherein the lower molecular weight component is a homopolymer and the higher molecular weight component a copolymer of ethylene and butene or hexene.

15. A process as claimed in any one of claims 1 to 14 wherein the weight ratio of lower molecular weight component to higher molecular weight component is in the range 60/40 to 40/60.

16. An ethylene polymer obtainable using a process as claimed in claims 1 to 15.

17. Use of a metallocene compound as defined in claim 1 in a multistage process for the manufacture of a multimodal polyethylene polymer.
